(19) **Europäisches Patentamt**
**European Patent Office**
**Office européen des brevets**

(11) **EP 1 995 437 B1**

(12) **FASCICULE DE BREVET EUROPEEN**

(45) Date de publication et mention
de la délivrance du brevet:
**13.04.2011 Bulletin 2011/15**

(51) Int Cl.:
*F02D 41/00* (2006.01)    *F02D 41/18* (2006.01)

(21) Numéro de dépôt: **08156224.1**

(22) Date de dépôt: **15.05.2008**

(54) **Procédé d'estimation du rendement volumétrique d'un moteur à combustion interne**

Verfahren zur Abschätzung des volumetrischen Wirkungsgrades eines Verbrennungsmotors

Method of estimating the volumetric efficiency of an internal combustion engine

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **24.05.2007 FR 0755231**

(43) Date de publication de la demande:
**26.11.2008 Bulletin 2008/48**

(73) Titulaire: **PSA Peugeot Citroen Automobiles S.A.**
**78140 Velizy Villacoublay (FR)**

(72) Inventeurs:
• **Hayat, Olivier**
**78000, Versailles (FR)**
• **Calendini, Pierre-Olivier**
**92210, Saint-Cloud (FR)**

(74) Mandataire: **Ménès, Catherine**
**Peugeot Citroën Automobiles SA**
**PI (LG081)**
**18, rue des Fauvelles**
**92250 La Garenne-Colombes (FR)**

(56) Documents cités:
**EP-A- 1 327 760       US-A- 5 520 153**
**US-A1- 2006 161 332**

**Description**

L'invention concerne un procédé d'estimation du rendement volumétrique d'un moteur. En particulier, l'invention s'applique au contrôle de moteurs à combustion interne, quel que soit le mode d'introduction du carburant.

Par définition, le rendement volumétrique d'un moteur est le rapport entre la masse d'air réellement admise dans la chambre de combustion et une masse d'air théoriquement admise. La masse d'air théoriquement admise est quant à elle calculée a priori à partir de la cylindrée du moteur et de la densité des gaz dans le volume dit de référence représentant le volume du collecteur d'admission couramment appelé plénum. La connaissance du rendement volumétrique d'un moteur permet donc de caractériser l'efficacité, en terme de perméabilité, d'une partie de la ligne d'air de l'admission considérée, à savoir la partie s'étendant du volume de référence à la chambre de combustion incluse.

Les niveaux de performance et d'émission de polluants produits par un moteur à combustion interne sont notamment fonction de la quantité d'air enfermée dans la chambre de combustion du moteur. En conséquence, la connaissance en temps réel du rendement volumétrique d'un moteur permet d'optimiser son fonctionnement, en particulier en contrôlant dynamiquement les actionneurs de la boucle d'air en fonction dudit rendement volumétrique. L'utilisation d'un tel contrôle dynamique permet des gains importants en termes prestations du véhicule au conducteur.

L'estimation du rendement volumétrique d'un moteur dépend notamment de la mise en oeuvre d'un modèle. Il est connu d'utiliser des modèles exprimant le rendement volumétrique principalement en fonction d'une cartographie du régime moteur et du rapport de pression aux bornes des cylindres. Le niveau de rendement volumétrique est donc défini en fonction d'un mode de fonctionnement nominal du moteur. Or ce type de modèle s'adapte mal au cas d'un moteur dont les caractéristiques sont sensiblement éloignées des caractéristiques du moteur nominal correspondant. En outre, ces modèles sont peu adaptés aux différents cas de fonctionnement transitoire d'un moteur. Il est aussi connu du document US 2006/161332 un procédé de détermination du rendement volumétrique par une estimation basée sur l'équation des gaz parfait corrigée selon l'évolution des mesures effectuées.

L'invention a notamment pour but de pallier les inconvénients précités. A cet effet, l'invention a pour objet un procédé d'estimation du rendement volumétrique $\eta_{vol}$ d'un moteur. Le moteur comporte au moins un bloc fonctionnel volume de référence d'admission, un bloc fonctionnel respiration, un bloc fonctionnel échappement. Les gaz compris dans le bloc fonctionnel volume de référence d'admission sont à une température T2" et une pression P2". Les parois du bloc fonctionnel respiration sont à une température moyenne Tpm. Le gaz compris dans le volume près des soupapes échappement du bloc fonctionnel respiration 3 est à une pression P3. Le procédé selon l'invention comporte les étapes suivantes :

- une étape de réception de paramètres dynamiques du moteur, parmi lesquels la température T2", la température moyenne Tpm, la pression P3 et la pression P2", la richesse du carburant injecté ;
- une étape d'évaluation des variations des paramètres dynamiques du moteur reçus par rapport à des paramètres de références connus a priori pour un des points de fonctionnement nominal du moteur donné ;
- une étape de calcul du rendement volumétrique $\eta_{vol}$ du moteur à partir des variations des paramètres dynamiques du moteur, du régime du moteur et de coefficients déterminés pour ledit moteur.

En outre, le rendement volumétrique $\eta_{vol}$ est obtenu en appliquant l'expression mathématique suivante :

$$\eta_{vol} = \left(\eta_{ref} - \alpha_{TPM}\Delta T_{pm} + \alpha_{T''2}\Delta T_2''\right) \times \left(1 - \beta\Delta\pi\right) - \gamma\left(T_{ref} - T_2''\right) \times \Delta R_c$$

avec

- la variation $\Delta T_{pm}$ de la température moyenne de parois Tpm par rapport à la valeur de référence identifiée préalablement;

- la variation $\Delta T_2''$ de la température T2" par rapport à la valeur de référence identifiée préalablement ;

- la variation $\Delta\pi$ du rapport de la pression P3 et de la pression P2" par rapport à la valeur de référence identifiée préalablement ;

- la variation $\Delta R_c$ de la richesse du carburant injecté par rapport à la valeur de référence identifiée préalablement

- $\alpha_{TPM}$ un coefficient fonction du régime moteur ;

- $\alpha_{T''2}$ un coefficient fonction du régime moteur ;

- $\beta$ un coefficient déterminé pour ledit moteur ;

- $\gamma$ un coefficient déterminé pour ledit moteur.

Dans un mode de réalisation, le point de fonctionnement nominal du moteur est établi soit pour différentes valeurs du régime/couple du moteur soit pour différentes valeurs de régime / masse de carburant injectée dans le moteur.

L'invention a notamment pour avantages qu'elle permet de connaître le rendement volumétrique, caractéristique de la respiration moteur, quel que soit le point de fonctionnement considéré. En particulier, l'invention permet de déterminer le rendement volumétrique sur des moteurs comportant des moyens adaptés à la re-circulation des gaz brûlés à l'admission. De plus, l'invention permet de représenter les variations de rendement volumétrique, dues notamment aux échanges thermiques des gaz avec les conduits de la ligne admission ainsi que les variations dues aux changements de pression dans le volume de référence et dans le volume d'échappement. L'invention permet in fine d'affiner le contrôle des actionneurs compris dans la boucle d'air du moteur (par exemple, les différentes vannes comprises dans les moyens adaptés à la re-circulation des gaz brûlés à l'admission, les actionneurs de suralimentation, les valves de swirl, les actionneurs de levers de soupapes, ...).

D'autres caractéristiques et avantages de l'invention apparaîtront à l'aide de la description qui suit faite en regard des dessins annexés qui représentent :

- la figure 1, par un schéma bloc, un modèle fonctionnel adapté à l'estimation du rendement volumétrique d'un moteur ;

- la figure 2, par un synoptique, les étapes du procédé selon l'invention d'estimation du rendement volumétrique d'un moteur à combustion interne.

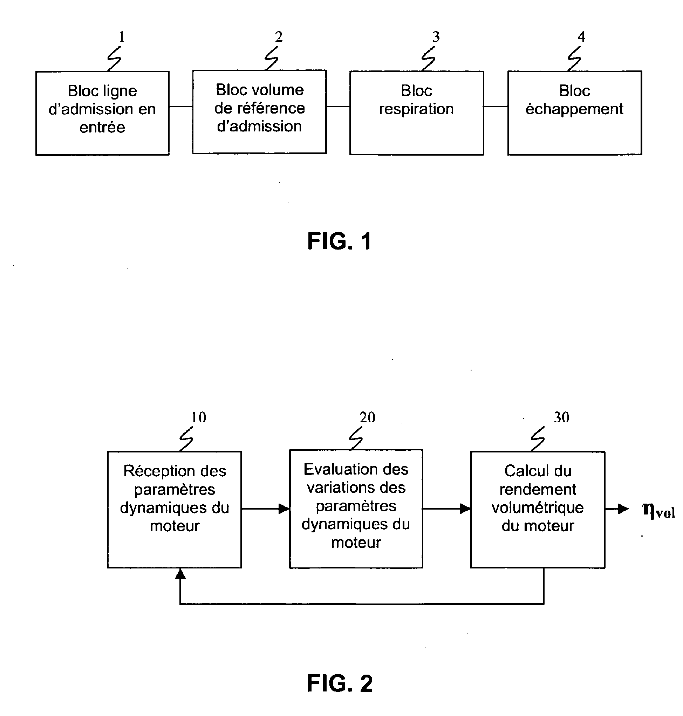

La figure 1 illustre par un schéma bloc un modèle fonctionnel adapté à l'estimation du rendement volumétrique d'un moteur. Le modèle comporte principalement 4 entités distinctes : un bloc ligne d'admission en entrée 1, un bloc volume de référence d'admission 2, un bloc respiration 3 et un bloc échappement 4.

Le bloc ligne d'admission en entrée 1 comprend notamment un ensemble d'éléments compris dans la ligne d'admission en entrée du moteur, à savoir notamment les éléments de la ligne d'admission compris entre l'atmosphère et le bloc volume de référence d'admission 2. Le bloc volume de référence d'admission 2 comprend quant à lui le volume de référence, volume dans lequel les gaz sont caractérisés par leur pression P2", leur température T2" et leur densité d'admission. Le bloc respiration 3 comporte un ensemble d'éléments de la ligne admission, notamment les conduits répartiteur, les conduits de la culasse, la chambre de combustion. Les grandeurs caractéristiques du bloc respiration 3 sont en particulier la richesse du carburant injecté (éventuellement déduite du débit d'air et du débit de carburant injecté), la température moyenne des parois Tpm du bloc respiration 3, la cylindrée du moteur et le rendement volumétrique ηvol. Le bloc d'échappement 4 correspond aux éléments compris entre le bloc respiration 3 et l'atmosphère. Le bloc d'échappement 4 est caractérisé par la pression P3 régnant dans le volume près des soupapes échappement compris dans le bloc respiration 3.

La figure 2 illustre par un synoptique les étapes du procédé selon l'invention d'estimation du rendement volumétrique d'un moteur à combustion interne. Les éléments identiques aux éléments déjà présentés sur les autres figures portent les mêmes références. Le procédé selon l'invention permet notamment d'estimer le rendement volumétrique ηvol du bloc respiration 3 quel que soit l'état de fonctionnement du moteur, à partir de la connaissance d'un certain nombre de paramètres.

C'est pourquoi, le procédé selon l'invention reçoit, au cours d'une étape 10 de réception des paramètres dynamiques du moteur, au moins les paramètres suivant :

- la température T2" des gaz dans le bloc volume de référence d'admission 2, ainsi que les températures des différentes parois en contact avec les gaz dans leur cheminement dans le bloc fonctionnel volume de référence d'admission (2), c'est-à-dire du plénum aux cylindres ;

- le taux de détente des gaz, c'est à dire le rapport $\dfrac{P_3}{P_{2"}}$ entre la pression P3 et la pression P2" des gaz compris dans le bloc volume de référence d'admission 2 ;

- la charge du moteur, quantifiée par la richesse du carburant injecté

Les températures des différentes parois en contact avec les gaz dans leur cheminement du plénum aux cylindres sont pondérées pour déterminer une température moyenne de parois Tpm. La connaissance de la température de paroi moyenne permet d'évaluer l'influence isolée d'une variation de chacune de ces températures sur le rendement volumétrique ηvol. En effet, les transferts conducto-convectifs entre les parois et le gaz modifient la densité de ce dernier et donc la masse admise dans le cylindre. Dans le procédé selon l'invention, l'influence des transferts thermiques est modulée en fonction du régime.

La prise en compte du taux de détente des gaz, i.e. le rapport de pression aval / amont des cylindres du moteur soit P3/P2", permet de quantifier la perturbation de la pression P3 sur le remplissage des cylindres. En effet, une augmentation de la pression P3 par rapport à la P2" entraîne une augmentation des gaz résiduels s'accompagnant éventuellement d'un flux de retour (désigné généralement par l'expression anglo-saxonne de « back flow »).

La prise en compte du taux de détente des gaz, i.e. le rapport de pression aval / amont des cylindres du moteur soit P3/P2", permet de quantifier la perturbation de la pression P3 sur le remplissage des cylindres. En effet, une augmentation de la pression P3 par rapport à la P2" entraîne une augmentation des gaz résiduels s'accompagnant éventuellement d'un flux de retour (désigné généralement par l'expression anglo-saxonne de « back flow »).

La connaissance de la charge du moteur permet d'en évaluer l'influence notamment sur la température des gaz résiduels en fin d'échappement et en début d'admission.

Puis, dans une étape 20 d'évaluation des variations des paramètres dynamiques du moteur reçus, sont évaluées:

- la variation $\Delta T_{pm}$ de la température moyenne de parois Tpm par rapport à la température moyenne de référence des parois de $T_{pm}\big|_{ref}$, exprimée par la relation mathématique suivante : $\Delta T_{pm} = T_{pm} - T_{pm}\big|_{ref}$ ;

- la variation $\Delta T_2^{"}$ de la température T2" des gaz dans le bloc volume de référence d'admission 2 par rapport à la température de référence $T_2^{"}\big|_{ref}$ des gaz dans le bloc volume de référence d'admission 2, exprimée par la relation

  mathématique suivante : $\Delta T_2^{"} = T_2^{"} - T_2^{"}\big|_{ref}$ ;

- la variation $\Delta\pi$ du taux de détente des gaz $\dfrac{P_3}{P_{2"}}$ par rapport au taux de référence de détente des gaz $\dfrac{P_3}{P_{2"}}\bigg|_{ref}$,

  exprimée par la relation mathématique suivante : $\Delta\pi = \dfrac{P_3}{P_{2"}} - \dfrac{P_3}{P_{2"}}\bigg|_{ref}$ ;

- la variation $\Delta R_c$ de la richesse du carburant injecté par rapport à la richesse de référence, exprimée par la relation

  mathématique suivante : $\Delta R_c = \dfrac{1}{4 + richesse} - \dfrac{1}{4 + richesse}\bigg|_{ref}$ .

Ces différentes variations sont évaluées par rapport à des paramètres de références, correspondant à un des points de fonctionnement du moteur. Ces points de fonctionnement peuvent être en particulier établis pour différentes valeurs du régime/couple du moteur ou encore pour différentes valeurs de régime / masse de carburant injectée dans le moteur. Ainsi pour un point de fonctionnement donné, connu a priori, les différents paramètres comme le rendement volumétrique ηvol, la température moyenne de parois Tpm, la température T2" des gaz dans le bloc volume de référence d'admission 2, la pression P3, la pression P2" et la richesse du carburant injecté sont connus ou déterminables. Ces points de fonctionnement peuvent être par exemple ceux d'une pleine charge classique dans des conditions de fonctionnement nominales (température de l'eau sensiblement égale à 110 °C, pour une température ambiante sensiblement égale à 20 °C).

Dans une étape 30 de calcul du rendement volumétrique du moteur, le rendement volumétrique du moteur est calculé. Le rendement volumétrique $\eta_{vol}$ peut être obtenu en appliquant l'expression mathématique suivante :

$$\eta_{vol} = \left(\eta_{ref} - \alpha_{TPM}\Delta T_{pm} + \alpha_{T''2}\Delta T_2^{''}\right) \times \left(1 - \beta\Delta\pi\right) - \gamma\left(T_{ref} - T_2^{''}\right) \times \Delta R_c$$

avec

- $\alpha_{TPM}$ un coefficient fonction du régime moteur ;

- $\alpha_{T''2}$ un coefficient fonction du régime moteur ;

- β un coefficient déterminé pour chaque moteur ;

- γ un coefficient déterminé pour chaque moteur.

La valeur des coefficients β et γ peut être déterminée à la suite d'essai et/ou par simulation.

A l'issue de l'étape 30 du procédé selon l'invention, le rendement volumétrique ηvol du moteur est délivré en sortie. Le rendement volumétrique ηvol est donc déterminé par le procédé selon l'invention quel que soit le fonctionnement moteur, en fonction du point de fonctionnement nominal choisi à l'étape 20. En outre, le rendement volumétrique ηvol obtenu est corrigé en fonction des différentes variations calculées à l'étape 20, cette correction prenant notamment en compte la sensibilité à la température (air refroidi ou non et présence ou non de moyens adaptés à la re-circulation des gaz brûlés à l'admission ) du moteur.

La connaissance du rendement volumétrique ηvol permet en particulier de contrôler les actionneurs de la boucle d'air (vanne(s) comprises dans les moyens adaptés à la re-circulation des gaz brûlés à l'admission, actionneur (s) de suralimentation, valves de swirl, actionneur(s) levers de soupapes, ...).

## Revendications

1. Procédé d'estimation du rendement volumétrique η$_{vol}$ d'un moteur mettant en oeuvre un modèle fonctionnel du moteur comportant au moins un bloc fonctionnel volume de référence d'admission (2), un bloc fonctionnel respiration (3) comportant notamment la chambre de combustion, un bloc fonctionnel échappement (4), les gaz compris dans le bloc fonctionnel volume de référence d'admission (2) étant à une température T2" et une pression P2",les parois du bloc fonctionnel respiration (3) étant à une température moyenne Tpm, le gaz compris dans le volume près des soupapes échappement du bloc fonctionnel respiration 3 étant à une pression P3, **caractérisé en ce qu'**il comporte les étapes suivantes :

   • une étape (10) de réception de paramètres dynamiques du moteur, parmi lesquels la température T2", la température moyenne Tpm, la pression P3 et la pression P2", la richesse du carburant injecté ;
   • une étape (20) d'évaluation des variations des paramètres dynamiques du moteur reçus par rapport à des paramètres de références connus a priori pour un des points de fonctionnement nominal du moteur donné ;
   une étape (30) de calcul du rendement volumétrique η$_{vol}$ du moteur à partir des variations des paramètres dynamiques du moteur, du régime du moteur et de coefficients déterminés pour ledit moteur en appliquant l'expression mathématique suivante :

$$\eta_{vol} = \left(\eta_{ref} - \alpha_{TPM}\Delta T_{pm} + \alpha_{T''2}\Delta T_2^{''}\right) \times \left(1 - \beta\Delta\pi\right) - \gamma\left(T_{ref} - T_2^{''}\right) \times \Delta R_c$$

   avec
   • la variation $\Delta T_{pm}$ de la température moyenne de parois Tpm ;

   • la variation $\Delta T_2^{''}$ de la température T2" ;
   • la variation Δπ du rapport de la pression P3 et de la pression P2" ;
   • la variation $\Delta R_c$ de la richesse du carburant injecté ;
   • $\alpha_{TPM}$ un coefficient fonction du régime moteur ;

• $\alpha_{T"2}$ un coefficient fonction du régime moteur ;
• β un coefficient déterminé pour ledit moteur ;
• γ un coefficient déterminé pour ledit moteur.

**2.** Procédé selon l'une quelconques des revendications précédentes **caractérisé en ce que** le point de fonctionnement nominal du moteur est établi pour différentes valeurs du régime/couple du moteur.

**3.** Procédé selon l'une quelconques des revendications 1 à 2 **caractérisé en ce que** le point de fonctionnement nominal du moteur est établi pour différentes valeurs du régime / masse de carburant injectée dans le moteur.

**Claims**

**1.** Method for estimating the volumetric efficiency $\eta_{vol}$ of an engine implementing a functional model of the engine comprising at least one admission reference volume functional block (2), a respiration functional block (3) comprising in particular the combustion chamber, an exhaust functional block (4), the gases comprised in the admission reference volume functional block (2) being at a temperature T2" and a pressure P2", the walls of the respiration functional block (3) being at a mean temperature Tpm, the gas comprised in the volume close to the exhaust valves of the respiration functional block 3 being at a pressure P3, **characterized in that** it comprises the following stages:

• a stage (10) for receiving dynamic parameters of the engine, including the temperature T2", the mean temperature Tpm, the pressure P3 and the pressure P2", the richness of the injected fuel;
• a stage (20) for evaluation of the variations of the dynamic parameters of the engine received with respect to reference parameters known a priori for one of the nominal functioning points of the given engine;
a stage (30) for calculation of the volumetric efficiency $\eta_{vol}$ of the engine from the variations of the dynamic parameters of the engine, of the speed of the engine and determined coefficients for the said engine, applying the following mathematical expression:

$$\eta_{vol} = (\eta_{ref} - \alpha_{TPM}\Delta T_{pm} + \alpha_{T"2}\Delta T_2^{"}) \times (1 - \beta\Delta\pi) - \gamma(T_{ref} - T_2^{"}) \times \Delta R_c$$

with
• the variation $\Delta T_{pm}$ of the mean temperature of walls Tpm;

• the variation $\Delta T_2^{"}$ of the temperature T2";
• the variation $\Delta\pi$ of the ratio of the pressure P3 and of the pressure P2";
• the variation $\Delta R_c$ of the richness of the injected fuel;
• $\alpha_{TPM}$ a function coefficient of the engine speed;
• $\alpha_{T"2}$ a function coefficient of the engine speed;
• β a determined coefficient for the said engine;
• γ a determined coefficient for the said engine.

**2.** Method according to any one of the preceding claims, **characterized in that** the nominal functioning point of the engine is established for different values of the speed/torque of the engine.

**3.** Method according to any one of Claims 1 to 2, **characterized in that** the nominal functioning point of the engine is established for different values of the speed/mass of fuel injected in the engine.

**Patentansprüche**

**1.** Verfahren zum Schätzen des volumetrischen Wirkungsgrads $\eta_{vol}$ eines Motors, das ein Funktionsmodell des Motors umsetzt, das mindestens einen Einlassbezugsvolumen-Funktionsblock (2) einen Atmungsfunktionsblock (3), der insbesondere die Brennkammer umfasst, einen Auspufffunktionsblock (4), aufweist, wobei die Gase, die in dem Einlassbezugsvolumen-Funktionsblock (2) enthalten sind, eine Temperatur T2" und einen Druck P2" haben, wobei die Wände des Atmungsfunktionsblocks (3) eine mittlere Temperatur Tpm haben, wobei das Gas, das in dem Volumen in der Nähe der Auslassventile des Atmungsfunktionsblocks (3) enthalten ist, einen Druck P3 hat, **dadurch gekennzeichnet, dass** es die folgenden Schritte aufweist:

> • einen Schritt (10) des Empfangens dynamischer Parameter des Motors, darunter die Temperatur T2", die mittlere Temperatur Tpm, der Druck P3 und der Druck P2", die Reichhaltigkeit des eingespritzten Kraftstoffs;
> • einen Schritt (20) des Beurteilens der Schwankungen der dynamischen Parameter des Motors, die im Vergleich zu vorab bekannten Bezugsparametern für einen der Nennbetriebspunkte des gegebenen Motors bekannt sind, empfangen wurden;
> einen Schritt (30) zum Berechnen des volumetrischen Wirkungsgrads $\eta_{vol}$ des Motors ausgehend von den Schwankungen der dynamischen Parameter des Motors, der Motordrehzahl und den für den Motor festgelegten Koeffizienten unter Anwenden der folgenden mathematischen Gleichung:

$$\eta_{vol} = (\eta_{ref} - \alpha_{TPM}\Delta T_{pm} + \alpha_{T"2}\Delta T_2^{"}) \times (1 - \beta\Delta\pi) - \gamma(T_{ref} - T_2^{"}) \times \Delta R_c$$

> wobei
> • die Variation $\Delta T_{pm}$ der mittleren Temperatur der Wände Tpm ist;
>
> • die Variation $\Delta T_2^{"}$ der Temperatur T2" ist;
> • die Variation $\Delta\pi$ des Verhältnisses des Drucks P3 und des Drucks P2" ist;
> • die Variation $\Delta R_c$ die Reichhaltigkeit des eingespritzten Kraftstoffs ist;
> • $\alpha_{TPM}$ ein Koeffizient ist, der von der Motordrehzahl abhängt:
> • $\alpha_{T"2}$ ein Koeffizient ist, der von der Motordrehzahl abhängt;
> • $\beta$ ein für den Motor festgelegter Koeffizient ist;
> • $\gamma$ ein für den Motor festgelegter Koeffizient ist.

2. Verfahren nach dem vorhergehenden Anspruch, **dadurch gekennzeichnet, dass** der Nennbetriebspunkt des Motors für unterschiedliche Werte der Motordrehzahl/des Motordrehmoments erstellt wird.

3. Verfahren nach einem der Ansprüche 1 bis 2, **dadurch gekennzeichnet, dass** der Nennbetriebspunkt des Motors für unterschiedliche Werte der Drehzahl / der in den Motor eingespritzten Kraftstoffmasse erstellt wird.

```
┌─────────────┐   ┌─────────────┐   ┌─────────────┐   ┌─────────────┐
│ 1           │   │ 2           │   │ 3           │   │ 4           │
```

Bloc ligne d'admission en entrée — Bloc volume de référence d'admission — Bloc respiration — Bloc échappement

## FIG. 1

Réception des paramètres dynamiques du moteur (10) → Evaluation des variations des paramètres dynamiques du moteur (20) → Calcul du rendement volumétrique du moteur (30) → $\eta_{vol}$

## FIG. 2

**EP 1 995 437 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006161332 A